# EUROPÄISCHE PATENTSCHRIFT

(11) **EP 2 664 815 B1**
(45) Veröffentlichungstag und Bekanntmachung des Hinweises auf die Patenterteilung: **29.04.2015**
(21) Anmeldenummer: 13001202.4
(22) Anmeldetag: 11.03.2013
(51) Int. Cl.: F16D 66/02, F16D 55/226

(54) **Scheibenbremse, insbesondere für Nutzfahrzeuge**
Disc brake, in particular for commercial vehicles
Frein à disque, notamment pour véhicules utilitaires

(30) Priorität: 16.05.2012 DE 102012009841
(43) Veröffentlichungstag der Anmeldung: 20.11.2013
(73) Patentinhaber: Wabco Radbremsen GmbH, 68229 Mannheim (DE)
(72) Erfinder: Reddemann, Bernward, 68766 Hockenheim (DE); Kalmbach, Marcel, 74360 Ilsfeld (DE)
(74) Vertreter: Leinweber & Zimmermann

(56) Entgegenhaltungen:
- DE-A1- 3 926 437
- GB-A- 1 582 567
- US-A- 5 927 445

## Beschreibung

Die Erfindung betrifft eine Scheibenbremse, insbesondere für Nutzfahrzeuge, mit einem eine Bremsscheibe umgreifenden Bremssattel, einer auf einer Seite des Bremssattels angeordneten Zuspanneinrichtung in dem Bremssattel, einer den Bremssattel auf der der Bremsscheibe zugewandten Seite verschließenden Verschlußplatte für den Bremssattel, die eine Funktionsöffnung zum Durchtritt mindestens eines Teils der Zuspanneinrichtung aufweist, und einem an einem Verschleißsensor für einen Bremsbelag angeschlossenen Kabel.

Eine einschlägige Scheibenbremse nach dem Stand der Technik ist in Figur 1 dargestellt. So eine Bremse ist z.B. aus US-A-5 927 445 bekannt.

Es ist bekannt, bei herkömmlichen Scheibenbremsen zur Ermittlung des Bremsbelag- und/oder Bremsscheibenverschleißes wenigstens einen Bremsbelag mit einem Verschleißsensor zu bestücken. Von dem Sensor aus verläuft dann ein Kabel entlang dem zuspannseitigen Bremssattelbereich zu einem eine Schnittstelle bildenden fahrzeugseitigen Anschlußteil, das je nach Fahrzeug- bzw. Kundenspezifikation unterschiedlich ausgeführt und an unterschiedlichen Stellen angeordnet sein kann.

Da insbesondere bei Nutzfahrzeugscheibenbremsen wegen der hohen Bremsleistung nahe den Bremsbelägen extreme Temperaturen auftreten und die Einbauräume im Radfelgenbereich für den Bremssattel sehr eng sind, bedarf es insbesondere in dem der Bremsscheibe am nächsten liegenden Sattelbereich genauester Halte-/Verlegungspunkte zur Positionierung / Halterung des Anschlußkabels, um das Kabel vor Kontakt mit dem zuspannseitigen Bremsbelag (Überhitzung) und/oder der drehenden Radfelge (Schleifen) zu schützen.

Die Erfindung befaßt sich insofern insbesondere mit der Halterung des Kabels an dem zuspannseitigen Bremssattelbereich.

Damit das bremsenseitige Kabel, sei es für den Transport der Bremse zum Kunden, sei es in eingebautem Zustand, nicht lose herumhängt und zerstörungsfrei gehaltert ist, werden herkömmlicherweise Kabelclips oder sogenannte Kabelbinder verwendet.

Kabelclips aus Federblech, bestehend aus einem Fuß- und einem Kabelhaltebereich, werden mit ihrem Fußbereich reibschlüssig in Gehäusebohrungen des Bremssattels eingedrückt. Da das relativ dünnwandige und aus einem Gußwerkstoff hergestellte Sattelgehäuse aus Festigkeitsgründen nicht angebohrt werden darf, müssen separate Gußandikkungen vorgesehen sein, um darin die Sacklochbohrungen einzubringen. In diese Bohrungen werden die Kabelclips reibschlüssig verbracht. Der dafür erforderliche Mehraufwand an Gußmaterial und das Einbringen der Bohrungen sind unwirtschaftlich. Ferner besteht die Gefahr, daß sich der Kabelclip löst, wodurch die Kabelpositionierung aufgehoben ist. Es kann auch passieren, daß sich der Kabelclip innerhalb der Haltebohrung verdreht. In einem solchen Falle kann es an den Kanten zu Abscher- oder Scheuerstellen der Kabelisolierung bzw. des Kabels kommt.

Kabelbinder dagegen sind oftmals mangels Befestigungsmöglichkeiten nur sehr ungenügend positionierbar, oder es müssen spezielle Materialdurchbrüche im Gußmaterial geschaffen werden, die entweder Festigkeitsprobleme mit sich bringen oder separate Gußandickungen erfordern.

Insbesondere dann, wenn Nutzfahrzeugscheibenbremsen erst im Bedarfsfall mit elektrischen Verschleißsensoren nachgerüstet werden, fehlen oftmals die erforderlichen Befestigungsmöglichkeiten am Bremssattel, oder es erfolgt eine unsachgemäße Kabelbefestigung. Damit liegt eine hohe Zerstörungswahrscheinlichkeit vor.

Aus dem Bereich der PKW-Scheibenbremsen mit hydraulischer Betätigung sind oftmals im Bremssattel mechanisch bearbeitet oder gießtechnisch recht aufwendig hergestellte Freiformen usw. bekannt, in denen dann entweder die Kabel direkt oder indirekt über Stopfen usw. gehalten sind. Solche Halterungen zeigen z.B. die DE 39 17 125 A1 und die DE 40 16 273 A1 mit einer in die Bolzenführung des Bremssattels einpreßbaren Abdeckkappe mit integrierter Öse. Wie diese Beispiele zeigen, sind diese Lösungen im Nutzfahrzeugbereich ungeeignet, weil die dazu erforderlichen Ausnehmungen / Freiformen / Bohrungen oder auch andere Formgebungen nachteiligen Einfluß auf die Festigkeit des Bremssattels haben oder sich in exponierten Positionen des Bremssattels gegenüber der Radfelge bzw. nahe liegenden Fahrwerksteilen befinden. Fehlen aber derartige Halterungsbereiche, sind keine sachgerechten Befestigungen oder Nachausrüstungen durchführbar.

Der Erfindung liegt die Aufgabe zugrunde, eine Scheibenbremse der eingangs genannten Art anzugeben, bei der eine Kabelhalterung für den zuspannseitigen Bremssattelbereich ohne Eingriff in die Gußstruktur der Scheibenbremseneinheit auskommt und dennoch eine sichere Halterung des Kabels auch in exponierter Position sichergestellt ist. Dabei soll es gleichgültig sein, ob die Kabelhalterung in der Erst- oder Nachausrüstung erfolgt.

Erfindungsgemäß wird die gestellte Aufgabe bei einer Scheibenbremse der eingangs genannten Art dadurch gelöst, daß die Verschlußplatte wenigstens eine Öffnung aufweist, in der eine Halteeinrichtung zum Halten des Kabels durch Formschluß festgelegt ist.

Da die an dem Gußteil der Bremse gehalterte Verschlußplatte, die den Innenraum des Bremssattels mit der Zuspanneinrichtung der Bremse dauerhaft und dichtend abschließt, in der Regel als Stanz-Biegeteil aus Blech hergestellt ist, kann die wenigstens eine (Durchgangs-)Öffnung sehr einfach und ohne Zusatzaufwand bereits bei der Blechbearbeitung hergestellt werden. Dadurch kann auf Gußandickungen und das Einbringen von Bohrungen in dem Bremssattel verzichtet werden.

Erfindungsgemäß bevorzugt ist vorgesehen, daß die Öffnung in einem radial über die Außenseite des Bremssattels überstehenden Bereich der Verschlußplatte liegt.

Mit anderen Worten steht derjenige Blechplattenbereich, in dem die wenigstens eine Öffnung ausgebildet ist, über die Gußstruktur des zuspannseitigen Bremssattelabschnitts radial über. Daher kann das Kabel hinter diesem Bereich (also auf der bremsscheibenabgewandten Seite der Verschlußplatte) entlang der Verschlußplatte geführt und auch in diesem Bereich gehaltert werden.

Damit bildet dieser Plattenbereich nicht nur eine optimale Befestigungsmöglichkeit für die Erst- oder Nachausrüstung, sondern er bildet auch einen Schutzschirm gegen Wärmeabstrahlung der auf der anderen Seite liegenden Bremsbeläge sowie der Bremsscheibe. Neben der einfachen Befestigungsmöglichkeit bietet dieser Plattenbereich zusätzlich noch einen Wärmeschutz für das dahinterliegende Kabel inklusive Kabelverlauf. Dies war bisher mit in diesem Bereich unmittelbar im Gußmaterial befestigten Kabelclips nicht möglich, weil diese in dieser exponierten Position frei und ungeschützt lagen.

Mithin sieht die Erfindung nach einer besonders bevorzugten Ausführungsform vor, daß die Halteeinrichtung das Kabel auf der der Bremsscheibe abgewandten Seite der Verschlußplatte hält.

Weil die Verschlußplatte mit der wenigstens einen Öffnung nebst dem Abschirmbereich versehen ist, kann einfach und ohne Werkzeuge sowohl in der Erst- als auch in der Nachausrüstung bzw. bei einem Belagwechsel eine sichere und einfache Kabelfestlegung erfolgen. Die Verschlußplatte ist Bestandteil des Bremssattels und ist nicht austauschbar.

Die Öffnungen können beliebige Formen haben. Die entsprechende Ausgestaltung hängt von der Form/Struktur des Kabelhalteteils ab. Die Öffnungen können als Loch (bei einem Halteteil aus Federdraht) oder als Schlitz (bei einem Halteteil aus Federblech) ausgebildet sein.

Erfindungsgemäß bevorzugt ist vorgesehen, daß die Halteeinrichtung zwei Schenkel aufweist, die gegen eine elastische Rückstellkraft einander angenähert werden können, um sie in die Öffnung einzustecken, und die sich dann wieder aufweiten, wodurch sie sich mit ihrer elastischen Rückstellkraft an der Innenkontur der Öffnung abstützen.

Mit anderen Worten wird ein in seiner Form beliebig ausführbares Halteteil mit zwei Federarmen formschlüssig und federelastisch in die Öffnung eingerastet, so daß sie sich beidseitig an den Flächen der Verschlußplatte mit ihren Konturen/Ausformungen abstützen.

Erfindungsgemäß weiter bevorzugt ist vorgesehen, daß die Halteeinrichtung mindestens einen Ansatz hat, der die Verschlußplatte in montiertem Zustand auf der Bremsscheibenseite hintergreift.

Nach einer weiter bevorzugten Ausführungsform der Erfindung ist eine Verdrehsicherung für die Halteeinrichtung vorgesehen.

In diesem Zusammenhang kann beispielsweise vorgesehen sein, daß die Innenkontur der Öffnung und die in montiertem Zustand daran anliegende Außenkontur der Halteeinrichtung von der Kreisform abweichen.

So kann beispielsweise das Kabelhalteteil in Federblechformen (und länglich) ausgeführt und in die als Schlitz ausgeführte Öffnung verbracht werden. Dies hat einen weiteren Vorteil.

Da ein Schlitz (ausgestanzt) zur formschlüssigen Halterung des länglich ausgebildeten Fußes des Kabelhalteteils dient, ist über den Formschluß nicht nur eine Verliersicherung, sondern auch eine Verdrehsicherung realisiert. Mit anderen Worten kann sich die erfindungsgemäße Halteeinrichtung im Gegensatz zu herkömmlichen, in Bohrungen des Gußsattels reibschlüssig eingesetzten runden Kabelfüßen nicht mehr drehen. Dadurch werden Kabelverwindungen mit einem Durchscheuern der Kabelisolation vermieden.

Erfindungsgemäß ist es weiter bevorzugt, daß der das Kabel aufnehmende Bereich der Halteeinrichtung zu der der Bremsscheibe abgewandten Seite hin offen oder geschlossen ist.

Ist er offen, kann das Kabel nach Anbringen der Halteeinrichtung in die Halteeinrichtung eingeführt werden. Ist er geschlossen, so muß das Kabel eingelegt werden, bevor die Halteeinrichtung in die Öffnung verbracht wird.

Wie bereits oben angedeutet, ist es erfindungsgemäß bevorzugt, daß die Halteeinrichtung zumindest teilweise aus einem Federblech oder aus einem Federdraht ist.

Nach einer besonders bevorzugten Ausführungsform der Erfindung kann vorgesehen sein, daß die Halteeinrichtung zwei Befestigungsbereiche aufweist und mit einem ersten Befestigungsbereich in der Öffnung der Verschlußplatte und mit einem zweiten Befestigungsbereich an dem Bremssattel festgelegt ist, wobei ein zwischen den beiden Befestigungsbereichen liegender Bereich im montierten Zustand gegen eine elastische Rückstellkraft gedehnt ist.

Mit anderen Worten liegt eine Lösung vor, die auf dem Zugfederprinzip mit einer Zweipunkthalterung basiert. Es wird nämlich das eine Ende der Halteeinrichtung an der Verschlußplatte und das andere an dem Bremssattel gehalten, wobei zur Montage die Halteeinrichtung in Längsrichtung gedehnt wird. Dadurch ist eine besonders verläßliche Festlegung der Halteeinrichtung an der Bremse gewährleistet.

Die Festlegung der Halteeinrichtung an dem Bremssattel liegt dabei erfindungsgemäß weiter bevorzugt an oder nahe der Bremsenrückseite. Dieser Bereich des Bremssattels ist dafür besonders geeignet, weil dort das Gußmaterial wegen des Befestigungsflansches für eine Betätigungseinrichtung, wie etwa einen Betätigungszylinder, dementsprechend dimensioniert ist.

Bevorzugt dient eine Öffnung, eine Vertiefung und/oder eine Bohrung an dem Bremssattel zum Festlegen des zweiten Befestigungsbereichs.

Die Halteeinrichtung weist erfindungsgemäß weiter bevorzugt eine Drahtwindung, eine Schlaufe und/oder eine Öse zum Einlegen oder Einfädeln des Kabels auf. Dadurch ist eine besonders verläßliche Halterung und Führung des Kabels gewährleistet.

Im folgenden ist die Erfindung anhand bevorzugter Ausführungsbeispiele unter Bezugnahme auf die beiliegende Zeichnung mit weiteren Einzelheiten näher erläutert. Dabei zeigen
- Figur 1: eine perspektivische Draufsicht auf eine Scheibenbremse üblicher Ausgestaltung,
- die Figuren 2 bis 4: Teilansichten einer Scheibenbremse nach einem Ausführungsbeispiel der Erfindung,
- Figur 5: eine Halteeinrichtung nach einem ersten Ausführungsbeispiel der Erfindung,
- die Figuren 6 und 7: Teilansichten einer Ausführungsform der erfindungsgemäßen Scheibenbremse,
- Figur 8: einen Ausschnitt aus Figur 6, jedoch in vergrößertem Maßstab,
- die Figuren 9 bis 11: Halteeinrichtungen nach weiteren bevorzugten Ausführungsformen der Erfindung,
- Figur 12: eine ähnliche Ansicht wie Figur 6, jedoch von einem anderen Ausführungsbeispiel der Erfindung,
- Figur 13: eine Halteeinrichtung, wie sie bei dem Ausführungsbeispiel nach Figur 6 verwendet wird, und
- Figur 14: einen Vergleich der Halteeinrichtung nach Figur 13, nämlich oben im entspannten und unten im gespannten (montierten) Zustand.

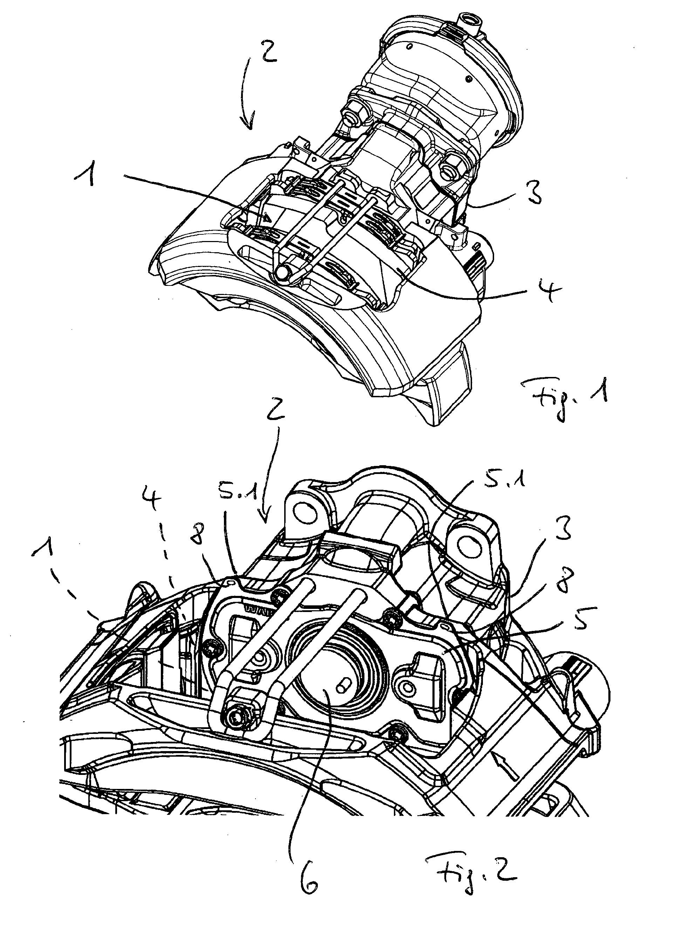

Figur 1 zeigt eine Scheibenbremseneinheit für Nutzfahrzeuge, zu der ein Bremssattel 2 und eine am Bremssattel befestige Betätigungseinrichtung gehört. Der Bremssattel umgreift rahmenförmig eine nicht dargestellte Bremsscheibe 1 und weist beidseitig der Bremsscheibe liegende und jeweils aus einem Reibbelag und einer Trägerplatte bestehende Bremsbeläge 4 auf. Die Bremsbeläge werden über eine Radialöffnung in dem Bremssattel in Schachtführungen eingesetzt und gelagert. Zur Positionierung der Bremsbeläge dient ein Bremsbelagniederhaltesystem, das hinreichend bekannt ist, weshalb es hier nicht weiter erläutert ist. Zum Anpressen der Bremsbeläge gegen die Bremsscheibe weist der Bremssattel 2 im zuspannseitigen Bremssattelbereich 3 eine Zuspanneinrichtung 6 auf. Der zuspannseitige Bremssattelbereich 3 ist zur Seite der Bremsscheibe 1 durch eine Verschlußplatte 5 verschlossen. Die Verschlußplatte 5 weist wenigstens eine Funktionsöffnung auf, durch die wenigstens ein Zuspannteil, nämlich ein Druckteil 6, auf die Bremsbeläge 4 zur Bremsbetätigung einwirkt. Der vordere, der Bremsscheibe 1 am nächsten liegende Gußbereich des zuspannseitigen Sattelbereichs 3 dient bei herkömmlichen Scheibenbremsen zur Einbringung der anfangs erläuterten Kabelclips usw. in entsprechende Bohrungen.

Figur 2 zeigt einen Teilausschnitt einer Ausführungsform der erfindungsgemäßen Scheibenbremse mit Blick auf den zuspannseitigen Sattelbereich 3, wobei zur besseren Darstellung die Bremsscheibe 1 und die Bremsbeläge 4 nicht abgebildet sind. Sie liegen funktionell aber so, wie in Figur 1 dargestellt.

Zur Bremsscheibe weisend ist der zuspannseitige Sattelbereich 3 durch die Verschlußplatte 5 dichtend verschlossen, die als Stanz-Biegeteil aus Blech hergestellt ist. Dahinter liegt im Sattelinnenraum eine Zuspanneinrichtung, die durch wenigstens eine Funktionsöffnung in der Verschlußplatte 5 mit wenigstens einem Druckteil 6 die Verschlußplatte 5 durchdringt, um eine Bremsenzuspannung einzuleiten. Die Funktionsöffnung wird gegenüber dem Druckteil 6 mit einer flexiblen Dichtung verschlossen.

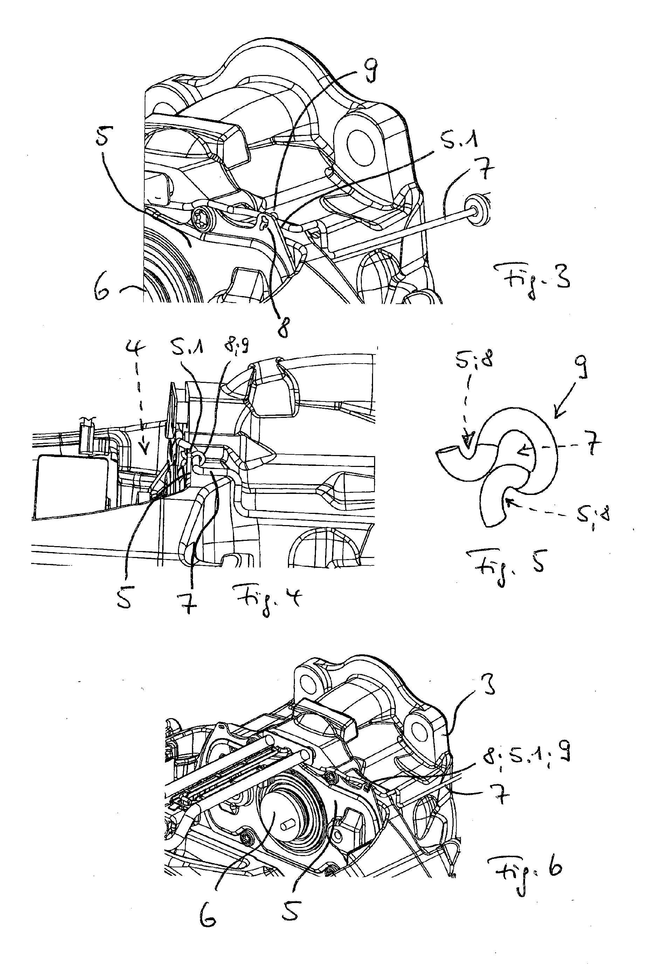

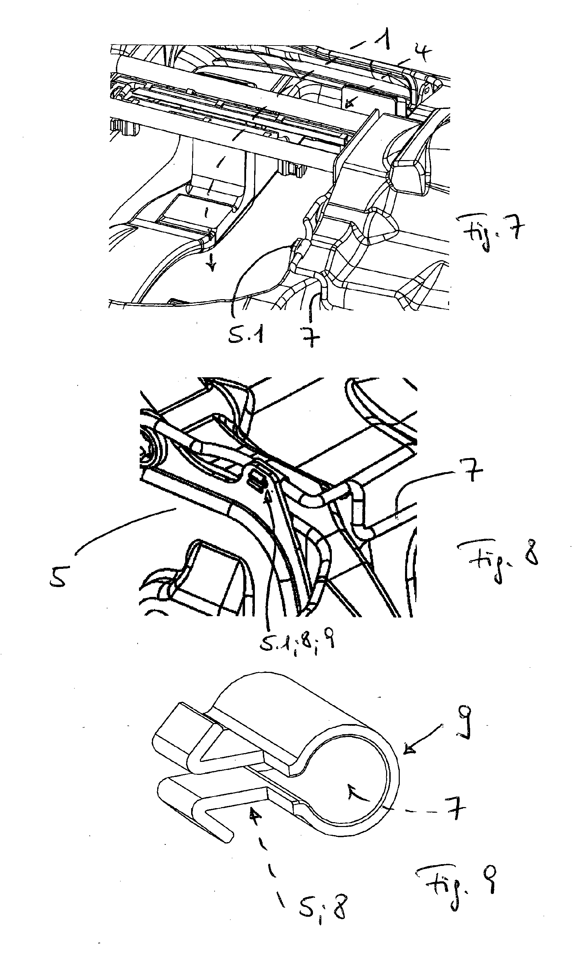

Im oberen linken und/oder rechten Bereich der Verschlußplatte 5 ist eine Öffnung 8 eingebracht. Bei den gezeigten Ausführungsbeispielen handelt es sich jeweils um eine Durchgangsöffnung. In den Figuren 2, 6, 7 und 8 hat sie die Form eines Längsschlitzes. Bei den Ausführungsformen nach den Figuren 3 und 4 ist sie als Loch ausgeführt. Je nach Bedarfslage wird in diese Öffnung eine Halteeinrichtung 9 für ein Kabel 7 formschlüssig und federelastisch so eingebracht, daß die Federklemmen (Fußbereich) zur Seite der Bremsscheibe zeigen. Damit liegt der Haltebereich für ein Kabel 7 "hinter" der Verschlußplatte 5.

Ein mithin auch der Abschirmung dienender einschlägiger Bereich 5.1 kann beliebige Erstreckung aufweisen, wenn sie nicht über die reguläre Rotationskontur des Bremssattels 2 übersteht. Damit wird für die wenigstens eine Halteeinrichtung 9 nebst dem Kabelverlauf eine optimale Schutzabdeckung gegen Wärmeabstrahlung erreicht.

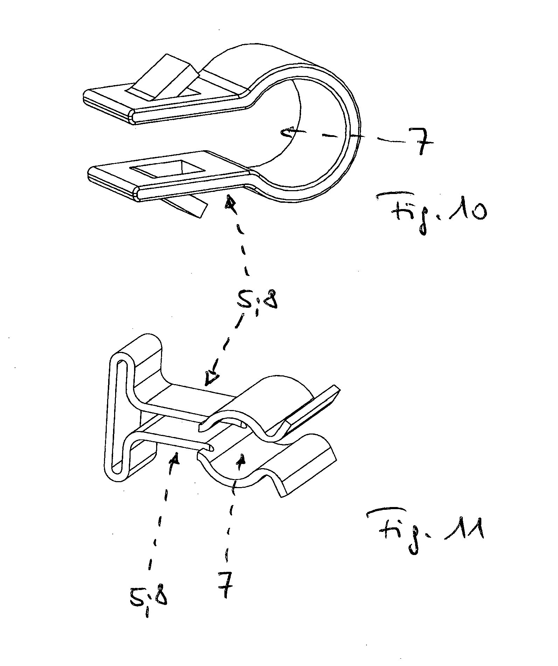

Wie aus den Figuren 5, 9, 10 und 11 ersichtlich, ist jede Halteeinrichtung 9 im Klemmbereich mit zwei Feder- bzw. Klemmschenkeln versehen. Zur klemmenden / formschlüssigen Halterung an der Verschlußplatte 5 sind die beiden Klemmschenkel elastisch gegeneinander drückbar, um sich nach der Öffnungsdurchdringung aufgrund der Rückstellkraft aufzuweiten und an die Wandung der Öffnung 8 anzudrücken. Über die Hakenausbildungen kommt es zu einer Hintergreifung der zugehörigen Seite der Verschlußplatte 5, wodurch die Lagefestlegung erfolgt ist.

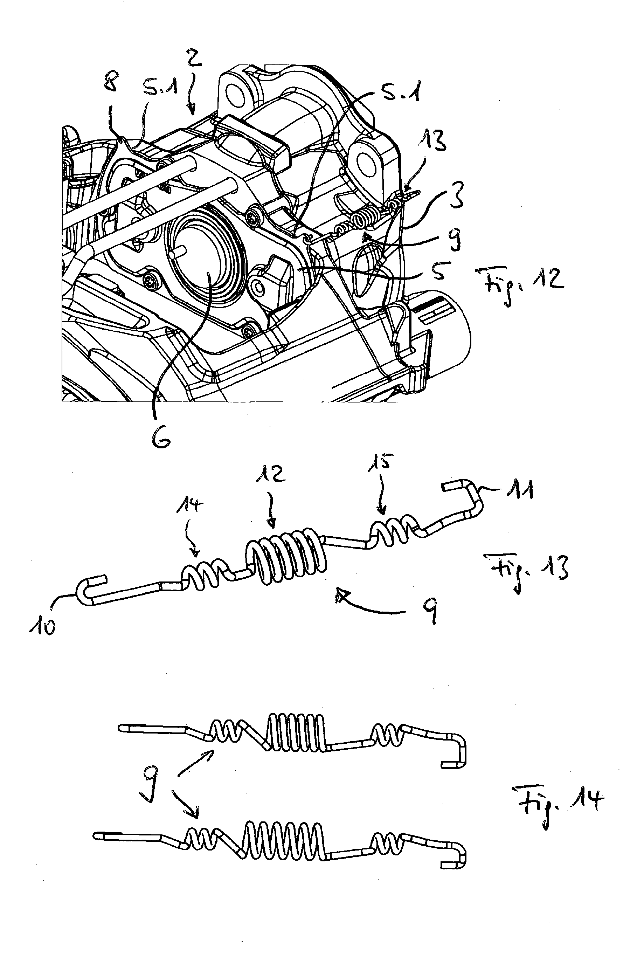

Bei dem Ausführungsbeispiel nach den Figuren 12 bis 14 ist die Halteeinrichtung 9 aus einem länglich verlaufenden Federdraht geformt, der beidseitig an den Enden einen Haken 10 bzw. 11 aufweist. Anstelle eines Hakens kann auch eine offene Schlaufe ausgebildet sein.

Mit dem einen Haken 10 wird die Halteeinrichtung 9 in die Öffnung 8 der Verschlußplatte 5 formschlüssig eingehängt, vorzugsweise wie bei dem Kabelclip am Bereich 5.1.

Das andere hakenförmige Ende 11 wird unter Streckung/Dehnung eines Drahtwindungsbereichs 12, der innerhalb des Verlaufs der Halteeinrichtung 9 liegt, in eine dafür vorgesehene Halteöffnung 13 des Bremssattels 2 eingehängt. Der Drahtwindungsbereich 12 liegt somit quer zur Federdrahtachsenrichtung der Halteeinrichtung 9.

Dafür weist der Bremssattel 2 an geeigneter Stelle, die an der oder nahe der Bremsenrückseite liegt, die der formschlüssigen Verankerung dienende Öffnung 13 auf. Dieser Bereich am Bremssattel 2 ist dafür besonders geeignet, weil dort das Gußmaterial wegen des Befestigungsflansches für einen Betätigungszylinder (siehe Figur 1) entsprechend dimensioniert ist.

Je nach Überbrückungslänge, d.h. je nach Abstand der Öffnung 8 von der Öffnung 13, erfolgt die Auslegung des Durchmessers des Federdrahts einerseits und der Anzahl und der Durchmesser des zur Dehnung erforderlichen Drahtwindungsbereichs 12 andererseits. Diese Parameter werden derart ermittelt, daß die Federzugkraft so groß ist, daß sich die Halteeinrichtung 9 selbst bei extremen Bremsenschwingungen (Schlechtwegstrecken) nicht mit dem daran bzw. darin gehalterten Kabel 7 aus der Verankerung bzw. den Verankerungen lösen kann. Dafür kann der Drahtdurchmesser im Bereich von 1 mm bis 2,5 mm liegen.

Ist also die Halteeinrichtung 9 unter Dehnung montiert, kann das Kabel 7 (in Figur 12 nicht gezeigt) mittels wenigstens eines Kabelbinders an der Halteeinrichtung befestigt werden. Dies kann vor oder nach der Montage der Halteeinrichtung 9 erfolgen. Es wird aber an dem Drahtwindungsbereich 12 vorbeigeführt.

Die Halteeinrichtung 9 nach den Figuren 12 bis 14 weist aber zwei Verdrillungs- oder Einlegebereiche 14, 15 auf, in die das Kabel 7 zur verbesserten Festlegung und Führung auch eingelegt bzw. eingefädelt werden kann, anstatt vorbeigeführt zu werden. Dies kann wiederum vor oder nach der Montage der Halteeinrichtung 9 erfolgen.

Je nach Ausführung der Kabelhalterung 9, die hier nur als Auswahl funktioneller Möglichkeiten dargestellt ist, kann die Kabeleinbringung vor oder nach der Verankerung der Halteeinrichtung an der Verschlußplatte 5 erfolgen. In jedem Anwendungsfall ist es aber wesentlich, daß sowohl in der Erst- als auch in der Nachausrüstung mit einer Verschleißsensierung die Kabelhalterung und deren Positionierung an wenigstens einem festgelegten Punkt des Sattelbereichs erfolgt, da bereits die wenigstens eine Öffnung in der Verschlußplatte die ordnungsgemäße Positionierung vorgibt. Fehlbefestigungen können somit wirkungsvoll vermieden werden. Gleichfalls können Scheuerstellen bzw. Kabelbeschädigungen wirkungsvoll vermieden werden, wenn das in die Kabelhalterung 9 eingebettete Kabel maßvoll eingeklemmt wird. Dadurch können keine Relativbewegungen untereinander auftreten.

Die erfindungsgemäße Halterung des wenigstens einen Kabels kann nicht nur auf Kabel für Verschleißsensoren angewendet werden, sondern auch auf mehrere Kabel von Verschleißsensoren oder auf andere Kabel in Bremssystemen.

Die in der obigen Beschreibung, den Ansprüchen sowie der Zeichnung offenbarten Merkmale der Erfindung können sowohl einzeln als auch in beliebigen Kombinationen für die Verwirklichung der Erfindung in ihren verschiedenen Ausführungsformen wesentlich sein.

## Patentansprüche

1. Scheibenbremse, insbesondere für Nutzfahrzeuge, mit
einem eine Bremsscheibe (1) umgreifenden Bremssattel (2),
einer auf einer Seite des Bremssattels angeordneten Zuspanneinrichtung (6) in dem Bremssattel,
einer den Bremssattel auf der der Bremsscheibe zugewandten Seite verschließenden Verschlußplatte (5) für den Bremssattel, die eine Funktionsöffnung zum Durchtritt mindestens eines Teils der Zuspanneinrichtung aufweist, und
einem an einem Verschleißsensor für einen Bremsbelag angeschlossenen Kabel (7),
**dadurch gekennzeichnet, daß**
die Verschlußplatte (5) wenigstens eine Öffnung (8) aufweist, in der eine Halteeinrichtung (9) zum Halten des Kabels (7) durch Formschluß festgelegt ist.

2. Scheibenbremse nach Anspruch 1, **dadurch gekennzeichnet, daß** die Öffnung (8) in einem radial über die Außenseite des Bremssattels (2) überstehenden Bereich der Verschlußplatte (5) liegt.

3. Scheibenbremse nach Anspruch 1 oder 2, **dadurch gekennzeichnet, daß** die Halteeinrichtung (9) das Kabel (7) auf der der Bremsscheibe (1) abgewandten Seite der Verschlußplatte (5) hält.

4. Scheibenbremse nach einem der vorangehenden Ansprüche, **dadurch gekennzeichnet, daß** die Halteeinrichtung (9) zwei Schenkel aufweist, die gegen eine elastische Rückstellkraft einander angenähert werden können, um sie in die Öffnung (8) einzustecken, und die sich danach wieder aufweiten, wodurch sie sich mit ihrer elastischen Rückstellkraft an der Innenkontur der Öffnung abstützen.

5. Scheibenbremse nach einem der vorangehenden Ansprüche, **dadurch gekennzeichnet, daß** die Halteeinrichtung (9) mindestens einen Ansatz hat, der die Verschlußplatte (5) in montiertem Zustand auf der Bremsscheibenseite hintergreift.

6. Scheibenbremse nach einem der vorangehenden Ansprüche, **gekennzeichnet durch** eine Verdrehsicherung für die Halteeinrichtung (9).

7. Scheibenbremse nach einem der vorangehenden Ansprüche, **dadurch gekennzeichnet, daß** die Innenkontur der Öffnung (8) und die in montiertem Zustand daran anliegende Außenkontur der Halteeinrichtung (9) von der Kreisform abweichen.

8. Scheibenbremse nach einem der vorangehenden Ansprüche, **dadurch gekennzeichnet, daß** der das Kabel (7) aufnehmende Bereich der Halteeinrichtung (9) zu der der Bremsscheibe (1) abgewandten Seite hin offen oder geschlossen ist.

9. Scheibenbremse nach einem der vorangehenden Ansprüche, **dadurch gekennzeichnet, daß** die Halteeinrichtung (9) zumindest teilweise aus einem Federblech oder aus einem Federdraht ist.

10. Scheibenbremse nach einem der vorangehenden Ansprüche, **dadurch gekennzeichnet, daß** die Halteeinrichtung (9) zwei Befestigungsbereiche (10, 11) aufweist und mit einem ersten Befestigungsbereich (10) in der Öffnung (8) der Verschlußplatte (5) und mit einem zweiten Befestigungsbereich (11) an dem Bremssattel (2) festgelegt ist, wobei ein zwischen den beiden Befestigungsbereichen liegender Bereich (12) in montiertem Zustand gegen eine elastische Rückstellkraft gedehnt ist.

11. Scheibenbremse nach Anspruch 10, **dadurch gekennzeichnet, daß** die Festlegung der Halteeinrichtung (9) an dem Bremssattel (2) an oder nahe der Bremsenrückseite liegt.

12. Scheibenbremse nach Anspruch 10 oder 11, **gekennzeichnet durch** eine Öffnung (13), eine Vertiefung und/oder eine Bohrung an dem Bremssattel (2) zum Festlegen des zweiten Befestigungsbereichs (11).

13. Scheibenbremse nach einem der Ansprüche 10 bis 12, **dadurch gekennzeichnet, daß** die Halteeinrichtung (9) eine Drahtwindung (14, 15), eine Schlaufe und/oder eine Öse zum Einlegen oder Einfädeln des Kabels (7) aufweist.

## Claims

1. A disc brake, in particular for commercial vehicles, comprising
a brake calliper (2) encompassing a brake disc (1),
a brake application device (6) arranged on one side of the brake calliper in the brake calliper,
a closure plate (5) for the brake calliper closing the brake calliper on the side facing the brake disc which has a functional opening for the passage of at least part of the application device, and
a cable (7) connected to a wear sensor for a brake lining,
**characterised in that**
the closure plate (5) has at least one opening (8) in which a holding device (9) for holding the cable (7) is fixed by form closure.

2. The disc brake according to Claim 1, **characterised in that** the opening (8) lies in a region of the closure plate (5) that protrudes radially over the outside of the brake calliper (2).

3. The disc brake according to Claim 1 or 2, **characterised in that** the holding device (9) holds the cable (7) on the side of the closure plate (5) facing away from the brake disc (1).

4. The disc brake according to any of the preceding claims, **characterised in that** the holding device (9) has two arms which can be moved close to one another against an elastic reset force in order to insert them into the opening (8) and then to expand them again by means of which they are supported with their elastic reset force against the inner contour of the opening.

5. The disc brake according to any of the preceding claims, **characterised in that** the holding device (9) has at least one extension that engages behind that closure plate (5) on the brake disc side in the fitted state

6. The disc brake according to any of the preceding claims, **characterised by** a lock against rotation for the holding device (9).

7. The disc brake according to any of the preceding claims, **characterised in that** the inner contour of the opening (8) and the outer contour of the holding device (9) resting against the latter in the fitted state deviate from circularity.

8. The disc brake according to any of the preceding claims, **characterised in that** the region of the holding device (9) accommodating the cable (7) is open or closed to the side facing away from the brake disc (1).

9. The disc brake according to any of the preceding claims, **characterised in that** the holding device (9) is made at least partially from a spring steel sheet or a spring wire.

10. The disc brake according to any of the preceding claims, **characterised in that** the holding device (9) has two fastening regions (10, 11) and is fixed with a first fastening region (10) in the opening (8) of the closure plate (5) and with a second fastening region (11) to the brake calliper, a region (12) lying between the two fastening regions being extended against an elastic reset force in the fitted state.

11. The disc brake according to Claim 10, **characterised in that** the fixing of the holding device (9) to the brake calliper (2) lies on or close to the rear side of the brake.

12. The disc brake according to Claim 10 or 11, **characterised by** an opening (13), a depression and/or a bore hole on the brake calliper (2) for fixing the second fastening region (11).

13. The disc brake according to any of Claims 10 to 12, **characterised in that** the holding device (9) has a wire twist (14, 15), a loop and/or a lug in which the cable (7) is inserted or threaded.

## Revendications

1. Frein à disque, notamment pour véhicules utilitaires, comportant
un étier de frein (2) enserrant un disque de frein (1),
un dispositif de serrage de frein (6) situé dans l'étier de frein sur un côté de l'étier de frein, une plaque de fermeture (5) destinée à l'étier de frein, située sur le côté tourné vers le disque de frein et servant à fermer l'étier de frein, laquelle plaque de fermeture présente une ouverture fonctionnelle destinée au passage d'au moins une partie du dispositif de serrage de frein, et
un câble (7) relié à un capteur d'usure relatif à une garniture de frein,
**caractérisé en ce que**
la plaque de fermeture (5) présente au moins une ouverture (8) dans laquelle est fixé un moyen de retenue (9) destiné à retenir le câble (7) par complémentarité de formes.

2. Frein à disque selon la revendication 1, **caractérisé en ce que** l'ouverture (8) est située dans une zone de la plaque de fermeture (5) qui fait radialement saillie au-dessus du côté extérieur de l'étier de frein (2).

3. Frein à disque selon la revendication 1 ou 2, **caractérisé en ce que** le moyen de retenue (9) retient le câble (7) sur le côté de la plaque de fermeture (5) qui est détourné du disque de frein (1).

4. Frein à disque selon l'une des revendications précédentes, **caractérisé en ce que** le moyen de retenue (9) présente deux pattes qui peuvent se rapprocher l'une de l'autre sous l'effet d'une force de rappel élastique, permettant de les faire passer dans l'ouverture (8), puis qui s'écartent à nouveau, moyennant quoi elles s'appuient sur le contour interne de l'ouverture grâce à leur force de rappel élastique.

5. Frein à disque selon l'une des revendications précédentes, **caractérisé en ce que** le moyen de retenue (9) présente au moins un épaulement qui, après montage, s'engage derrière la plaque de fermeture (5) sur le côté disque de frein.

6. Frein à disque selon l'une des revendications précédentes, **caractérisé par** un moyen anti-torsion pour le moyen de retenue (9).

7. Frein à disque selon l'une des revendications précédentes, **caractérisé en ce que** le contour interne de l'ouverture (8) et le contour externe du moyen de retenue (9) qui y est contigu après montage diffèrent d'une forme circulaire.

8. Frein à disque selon l'une des revendications précédentes, **caractérisé en ce que** la zone du moyen de retenue (9) qui reçoit le câble (7) est ouverte ou fermée vers le côté détourné du disque de frein (1).

9. Frein à disque selon l'une des revendications précédentes, **caractérisé en ce que** le moyen de retenue (9) se compose au moins partiellement de tôle à ressort ou de fil à ressort.

10. Frein à disque selon l'une des revendications précédentes, **caractérisé en ce que** le moyen de retenue (9) présente deux zones de fixation (10, 11) et est fixé par une première zone de fixation (10) dans l'ouverture (8) de la plaque de fermeture (5) et, par une deuxième zone de fixation (11), sur l'étier de frein (2), moyennant quoi une zone (12) située entre les deux zones de fixation est étirée, après montage, sous l'effet d'une force de rappel élastique.

11. Frein à disque selon la revendication 10, **caractérisé en ce que** la fixation du moyen de retenue (9) sur l'étier de frein (2) s'effectue sur ou à proximité de l'arrière du frein.

12. Frein à disque selon la revendication 10 ou 11, **caractérisé par** une ouverture (13), un renfoncement et/ou un alésage sur l'étier de frein (2) destinés à l'établissement de la deuxième zone de fixation (11).

13. Frein à disque selon l'une des revendications 10 à 12, **caractérisé en ce que** le moyen de retenue (9) présente un enroulement de fil (14, 15), une boucle et/ou un oeillet destinés à l'insertion ou à l'enfilage du câble (7).
